Europäisches Patentamt

European Patent Office

Office européen des brevets

(11) Publication number: **0 226 384**
**A1**

## (12) EUROPEAN PATENT APPLICATION·

(21) Application number: **86309385.2**

(51) Int. Cl.⁴: **C25B 9/00**

(22) Date of filing: **02.12.86**

(30) Priority: **10.12.85 GB 8530430**

(43) Date of publication of application:
**24.06.87 Bulletin 87/26**

(84) Designated Contracting States:
**AT BE CH DE ES FR GB IT LI NL SE**

(71) Applicant: **IMPERIAL CHEMICAL INDUSTRIES PLC**
**Imperial Chemical House Millbank**
**London SW1P 3JF(GB)**

(72) Inventor: **Ramshaw, Colin**
**4 The Spinney Norley**
**Kingsley Cheshire(GB)**

(74) Representative: **Draggett, Peter Thornton et al**
**Imperial Chemical Industries PLC P.O. Box 6**
**Bessemer Road**
**Welwyn Garden City Herts AL7 LHD(GB)**

(54) Electrochemical cell.

(57) An electrode assembly for effecting electrochemical reaction in a liquid first phase, which assembly is characterised by
an electrode,
means for containing the liquid first phase in contact with the electrode,
means for removing a fluid second phase reaction product from the electrode, and
means for rotating the electrode and containing means together about an axis,
such that, on rotating together the electrically charged electrode (in contact with the first phase) and the containing means, the second phase reaction product is removed radially from the electrode; a series cell cascade comprising at least two such electrode assemblies in series; and an electrochemical process in a liquid using such an electrode assembly.

Fig.1.

## ELECTROCHEMICAL CELL

This invention relates to an electrode assembly for electrochemical reactions, to a cell cascade comprising a plurality of such assemblies, and to processes for electrochemical reactions using such an assembly or cascade.

The depolarisation of electrodes in industrial electrolytic cells poses a problem. We have now found a means for, unexpectedly, enhancing this depolarisation.

Accordingly the present invention provides an electrode assembly for effecting electrochemical reaction in a liquid first phase, which assembly is characterised by
an electrode,
means for containing the liquid first phase in contact with the electrode,
means for removing a fluid second phase reaction product from the electrode, and
means for rotating the electrode and containing means together about an axis,
such that, on rotating together the electrically charged electrode (in contact with the first phase) and the containing means, the second phase reaction product is removed radially from the electrode.

In one embodiment the electrode is a cathode.

The invention also provides an electrochemical process in a liquid first phase, characterised by rotating together an electrically charged electrode - (in contact with the first phase) and means for containing the first phase, so that a fluid second phase reaction product is removed radially from the electrode.

The first phase (and/or the second phase where it is a liquid -see below) may be a neat liquid or may be a solution of one or more solutes in the liquid, which solute may be a gas, liquid or solid, subject always to the proviso that the first phase is capable of electrochemical reaction.

By "fluid" in the case of the second phase we mean a substance or a mixture of substances, which is a gas or a liquid at the conditions of temperature and pressure at which the apparatus of the invention is operated. Where (as is usual) the second phase is a gas it may be one gas or a mixture of gases.

For example, the first phase may be a solution of solid sodium hydroxide in water, and the electrode may be a cathode. In this case the electrochemical reaction will be reduction of hydrogen ion to hydrogen. To reduce the excess potential required to overcome hydrogen polarisation - ('polarisation potential'), the product hydrogen second phase is removed in accordance with this invention.

Similarly the first phase may be a solution of sodium chloride in water, and the electrode may be an anode. The reaction will be oxidation of chloride ion to chlorine. To reduce the chlorine gas polarisation potential, the product chlorine second phase is removed in accordance with this invention.

As discussed further hereinafter, the radial movement of the second phase depends directly on relative densities of the two phases, and depends on their relative flow rate, although it may also be assisted by applying a pressure drop to both phases. It is generally preferred for economic reasons to minimise the need for an applied pressure drop, for example by maximising the difference in density of the two fluids. Since the first phase is a liquid, this means that the second phase is generally a gas.

Where the electrode (and/or its coating) material is relatively cheap, electrodes with relatively large specific areas are preferred since they maximise electrode efficiency, total cell current and reaction rate. Thus electrodes permeable to the first phase are preferred in this case. The electrode may be a cathode.

Where the electrode (and/or its coating) material is relatively expensive, conventional impermeable, e.g. plate electrodes are preferred.

The electrode, if permeable, may be a plurality of discrete components which contact to conduct electric current, or an integral whole. Where the permeable electrode comprises a plurality of discrete components, preferably they are mutually contacting fibres, e.g. as carbon or metal gauzes or felts, in which case the interstices of the permeable electrode are between the components. Less favourably, the individual components may be permeable, e.g. open-ended metal tubules in which case a proportion of the interstices are through the components and a proportion of the interstices are between the components. The permeable element is not usually an integral whole, but if so, it may be formed with pores, e.g. cast as a block with pores; or have pores formed therein, e.g. cast as a solid block and pores drilled therein; or be arranged to form pores between the parts thereof, e.g. a coil of wire.

While the permeable electrode may have straight pores, e.g. it may comprise aligned glass tubules or a metal or carbon block with channels drilled therein. Preferably the permeable electrode has tortuous pores through which the fluids flow, e.g. the abovementioned random gauzes or felts or mass of fibres, or it may be a coil of woven tape, a sintered mass, knitted or woven wire cloth, a crumpled mesh, skeleton foam, or particles. Where fibres are employed they may all have the same size and shape, or the sizes and/or shapes may be random, or the size and/or shape may be ordered.

Gauzes and felts are preferred since they have a relatively large specific surface area and voidage. By 'relatively large specific surface area' we mean the surface area of the electrode per unit volume of permeable electrode is at least 200 m$^{-1}$, preferably more than 1500 m$^{-1}$ and more preferably more than 3000 m$^{-1}$. Typical voidages are at least 85%, and preferably more than 90%. Complementary fibre diameters (mean) are in the range of 2 to 25 $\mu$, typically 2 to 10 $\mu$ for carbon fibres and 7 to 25 $\mu$ for metal fibres.

The electrode, if permeable, may be formed from any material which has the mechanical strength to withstand the stress generated in the material during rotation of the electrode at the rotational speeds employed (discussed hereinafter). Preferably the material is resistant to attack by or reaction with the fluids with which it is in physical contact. Typically, the material from which the permeable element is formed is carbon, optionally coated with conventional electrode coatings therefor, such as chemically resistant metals such as silver, platinum or platinum black or metal oxides, for example platinum oxide; a conductive or conductively coated plastic or ceramic; or a chemically resistant metal, e.g. stainless steel, nickel, titanium or tantalum. The electrode may thus be a composite of two or more materials in an appropriate disposition or a single material. It may in addition have a conventional electro-catalytic coating.

Where, as may often be the case, the electrode, if permeable, is not mechanically self-supporting, e.g. it comprises an integral whole arranged to form pores between the parts thereof, or a plurality of discrete components, such as a felt, means to retain the electrode in a desired shape and/or position in the rotating assembly and to maintain its permeability are often necessary. The said means is preferably in the form of at least one member, the or each member being rotatable about the same axis as the permeable electrode - (hereinafter "rotatable member") and the permeable electrode being retained by one member or two or more members in cooperation.

The member or members may also or alternatively serve to form means for containing the first fluid phase in contact with the electrode, for example an electrode chamber to contain and/or channel the first and/or second phases.

The electrode may have a plane of symmetry in which the axis of rotation lies, e.g. it may be in the form of a permeable slat which is rotated about an axis perpendicular to the axis of the slat and distant from the mid-point thereof. Preferably the electrode has a plurality of planes of symmetry which intersect at a line co-incident with the axis of rotation, e.g. it may be in the form of a slat or square annulus which is rotated about an axis perpendicular to the axis of the slat or axes of the square and co-incident with the mid-point thereof. Alternatively, the electrode may have an axis of symmetry which coincides with the axis of rotation, e.g. the electrode may be in the form of a circular annulus which is rotated about its axis of symmetry. Where the electrode is in the form of an annulus the outer diameter of the circular annulus or diagonal of a square annulus is typically in the range 250 mm to 1.25 metres, and the inner diameter or diagonal is typically in the range 50 mm to 60 mm.

While the axis of rotation may be horizontal or vertical or at any angle between, it is often convenient to have the axis horizontal. Where an electrode in the form of an annulus is employed, typically rotary movement is applied to it by a shaft projecting from the plane of the annulus along the axis thereof. The permeable electrode may be rotated by, for example, a variable speed fluid drive, a pulley which may be driven by a belt from an electric motor, or by turbo-propulsion.

As the specific surface area for any particular permeable electrode is increased, the necessary applied pressure drop across the permeable electrode increases. Simple experiment will readily reveal a suitable permeable electrode for any desired speed of rotation and phase combination.

Where at least one rotatable member is employed to retain the electrode and/or to form an electrode chamber, the permeable electrode may be disposed throughout or in part of the member or throughout between, or between parts of, two members. Such an electrode may be a cathode.

The size of the electrode and its disposition in the rotatable member may be determined by the density and the interfacial area of the permeable electrode and by the flow characteristics of the phases.

The or each rotatable member will generally have or comprise the same, or similar, form as the electrode, and preferred forms and the reasons therefor will be as described for the electrode hereinbefore. Thus where the electrode is an annulus, the rotatable member will often comprise a square plate or a disc, by which the electrode is clamped axially against e.g. another such square plane or disc, with a annulus between the discs which surrounds the outer periphery of the electrode.

Each rotatable member, for whatever reason it is used, may be constructed of any material or combination of materials which has (a) the mechanical strength and creep resistance to withstand the stress generated in the material during rotation of the rotatable member at the rotational speeds employed and (b) the corrosion resistance to tolerate the environments with which the rotatable member may be in contact during use. Typical materials from which each rotatable member may be constructed include inter alia plastics which are not degraded in the electrode environment, such as halogenated or some halogenatable polymers euch as PVC, chlorinated PVC, chlorinated rubbers and chloroprene rubbers and PTFE composites, and some engineering plastics such as ABS; graphite; and metals such as titanium and nickel. The material of any given part of the rotatable member will also be determined by its other functions, e.g. whether it needs to be conductive or not. Choice of a suitable material will present no problem to those skilled in the art.

Where, as is usual, the second phase is the less dense of the two, the speed at which the electrode is rotated will depend on the maximum practical hydrostatic pressure which must and can be overcome to the second phase; this in turn depends on the radial distance over which the second phase flows on or in the electrode.

The minimum speed at which the electrode is rotated is often determined by the flow characteristics of any liquid phase. The maximum speed at which the permeable electrode may be rotated is governed by the mechanical etrength of the permeable electrode, and/or of each rotatable member. Where the or each rotatable member is or comprises a square plate or disc in or between which an annular electrode is disposed throughout, the speed of rotation will be: for a square or a disc of 0.5 metres diagonal or diameter, I000-3000 rpm; for a square or a disc of I metre diagonal or diameter, 500-2000 rpm; for a square or a disc of I.5 metres diagonal or diameter, 400-I000 rpm. Average centrifugal acceleration of the phases in the electrode is typically in the range 20 to I000 g.

The direction of flow of the second phase in the process according to the present invention will depend on the relative densities of the two phases, and on their relative flow rates. As noted hereinbefore, for the first reason the second phase is generally a gas.

Where, as is preferred, the electrode is permeable and has a relatively high specific surface area it may require a relatively high applied pressure drop to permeate the electrode with the liquid first phase. Thus, where there is no risk of depletion of the first phase or a reactant or electrolyte component thereof by a low first phase flow rate through the electrode, a zero or low total radial flow velocity is acceptable and may be desirable.

Where the second phase is a gas and the first phase has a zero or low total radial flow velocity - (e.g. a U-shaped or C-shaped radial path, as will often be the case and is preferred) the second phase will tend to flow radially inwards - (Embodiment A) in countercurrent flow for at least part of the first phase flow path. This is often facilitated and enhanced by increasing the speed of rotation of the electrode.

In theory, the assembly of the present invention in its broadest aspects could be operated using a denser second phase, with radially outward flow of the second phase and/or with the first phase flowing radially inwards or outwards. In the latter case, suitable and routine choice of the phases, their radial flow velocities and the speed of electrode rotation could be made for co-or countercurrent flow of the two phases.

It will be appreciated that even if the first phase is not depleted by the reaction, it may be depleted by entrainment with the reaction product second phase leaving the electrode and/or its chamber. This necessitates means to deliver the first phase to the eletrode which also typically comprises an orifice in an electrode chamber wall through which that phase may flow.

The delivery means is conveniently an orifice in a radially inner wall of an electrode chamber, although we do not exclude the possibility that it may be located elsewhere between the axis of rotation and the outer perimeter of the rotatable member. Preferably the delivery orifice communicates with a space extending axially through the electrode assembly, for example the interior of a hollow shaft (which also serves to rotate the electrode assembly), to which the first phase may be charged conventionally. Where that phase is a mixture of components, these may be delivered to the electrode through the same or separate delivery means, e.g. they may be delivered through concentric or adjacent tubes.

Means for removing a reaction product second phase from the electrode will often also serve as an outlet means for the first phase (which has permeated the electrode, if permeable). In Embodiment A this product removal means is conveniently a plurality of outlet orifices in a radially inner wall of an electrode chamber. Where the first phase delivery orifice is also in a radially inner wall of an electrode chamber it is convenient that there is a single annular inner wall with the plurality of outlet orifices disposed uniformly around part of the periphery and with the delivery orifice in the other part.

Preferably the outlet means communicates with an axially extending space similar to and adjacent to or coaxial with the first phase delivery space described above, and from which a reaction product second phase and/or first phase run-off may be collected.

The residence time of the second phase on or within the electrode and hence the degree of electrode polarisation is a function of the radial dimensions of the electrode, the nature and permeability of the electrode if permeable, the rotational speed, the flow rate of the phases and the rate of production of the second phase, in turn dependent on current density. These parameters interact with each other and affect the residence time. For example, where the radius is increased and the other parameters kept constant the residence time is increased; where the flow rate is increased and the other parameters kept constant the residence time is reduced; where the rotational speed is increased and the other parameters kept constant the residence time is reduced.

In order to put into effect the process of the invention described hereinbefore, the electrode assembly is used in an electrochemical cell. It will be appreciated that the electrode of the present invention may be a cathode or an anode, or both electrodes may be an electrode of the present invention. It is greatly preferred that, whether the permeable electrode is a cathode or anode, it is within an electrode chamber, that is, it is separated from the other electrode by conventional means, for example an ion-specific ion-permeable membrane such as a Nafion membrane with different anolyte and catholyte or a (micro)perforate inert membrane e.g. a PTFE (Gortex) gauze with a common electrolyte. Such an arrangement has the advantage of separating cathode and anode reactions and thus of minimising undesirable side reactions.

As mentioned previously the electrode, if permeable and having a relatively large specific surface area, may effectively fill the greater part, or substantially all, of the electrode chamber, and may thus offer a relatively large surface area to electrolyte volume ratio and thus a relatively low cell internal resistance. The permeable electrode, any electrode chamber and membrane and the cell may conveniently be of the lamellar form found in conventional cell presses. Thus the electrode itself, for example a cathode, may typically be a felt lamella 0.05 to 3 mm thick. The lower end of this range will be inappropriate where it is necessary to continually feed to the electrode a first phase which is depleted by the reaction, since the pressure drop over the electrode due to the thinness of the electrode will not be practically surmountable.

It is also greatly preferred that all the components of the cell such as the electrodes, any electrode chambers including a membrane and any other rotatable member are of the same form with respect to the axis of rotation and of similar transverse dimensions. Thus discoidal and/or circular annular or square planar and/or square annular components of substantially the same overall dimensions are particularly preferred.

A plurality of such cells may conveniently be joined in series electrically to give a series cell cascade, i.e. a bipolar arrangement. This arrangement offers a number of advantages. Spatially it is convenient that the cells are arranged to have a common axis of rotation, i.e. they may all be rotated by a common driveshaft. As mentioned hereinbefore each cell may conveniently be lamelliform and provide greater compactness for a given current rating and/or electrochemical cell or electrode reaction rate. This compactness may be enhanced by making the cells axially contiguous in a cell press, and further enhanced by providing each adjacent pair of cells with a common conductive wall (typically a rotatable member) to provide an anode-cathode connection between adjacent cells. Such an arrangement has the added advantage of eliminating the material and maintenance costs associated with the low-resistance bus-bars necessary for parallel cell banks. Typically, the cells in the cascade will be identical; it is particularly convenient to design the number of cells in the cascade so that the operational voltage drop across the cascade corresponds to a conventional industrial supply voltage, for example 440 v.

Accordingly the invention further provides a series cell cascade for electrochemical reaction characterised by comprising at least two electrode assemblies in accordance with the present invention.

The cascade will in general comprise a plurality of identical electrode assemblies in which the electrodes are of the same polarity. Favoured and preferred assemblies and components thereof in the cascade are as so described hereinbefore.

It will be appreciated that the supply means and collecting means for the anode series and the cathode series within the cell series will respectively be in parallel from a manifold.

For this reason, these means must be so designed and arranged to minimise leakage currents across cells and to avoid shorting-out cells in the series.

Thus, where the first or, less likely, the second phase is electrically conductive, the means for delivering the first phase, or discharging the second phase from, to the electrode, will be highly resistive, for example any connection between the manifold and the electrode chamber will be of maximised length and minimised cross-section.

Similarly, any manifold for removing and/or collecting either of the two phases which is conductive will generally be of sufficiently large cross-section and/or of material of relatively high surface tension with respect to the removed and/or collected material, so that the latter will tend to be in dispersed or particulate form in the manifold.

The invention also provides an electrochemical process in a liquid first phase, characterised by rotating a series cell cascade in accordance with the present invention, under an applied electrical potential difference, and containing the first phase in contact with a plurality of electrodes, so that a fluid second phase reaction product is removed radially from the electrodes.

The processes according to the present invention may be employed, in any electrochemical reaction in a liquid first phase for the reduction of any polarisation potential required to discharge species in the first phase, by removing the second phase product species. Examples of such reactions include the cathodic reduction of hydrogen ion in an aqueous first phase to give hydrogen, and the anodic oxidation of chloride ion in a similar first phase to give chlorine.

The reduction in polarisation potential in this way may lead to considerable energy savings in conventional electrolytic processes, even taking into account the energy expenditure in operating the present apparatus.

Further features of the apparatus of the invention will now be described in terms of that embodiment in which the second, inwardly flowing phase is a gas and the first phase has zero or low total radial flow velocity. The skilled man will however appreciate that similar considerations will apply mutatis mutandis to other embodiments such as those mentioned hereinbefore.

The invention is further described with reference to the accompanying drawings in which

Figure I is a longitudinal section of a series cell cascade comprising a plurality of electrode assemblies (both cathode and anode assemblies) in accordance with the present invention;

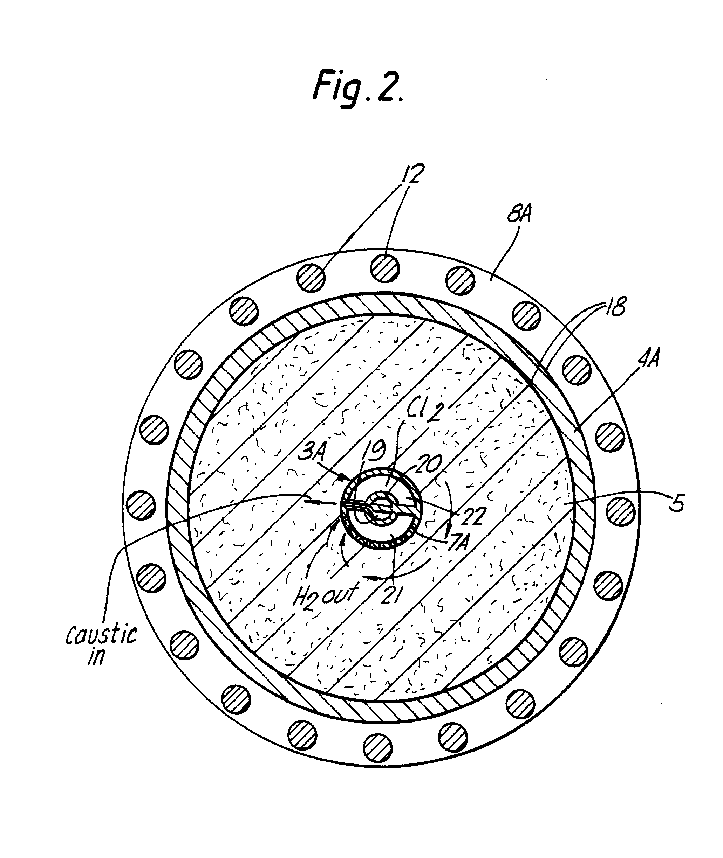

Figure 2 is a transverse section of the circular cross-section form of the cell cascade of Figure I along the line AA;

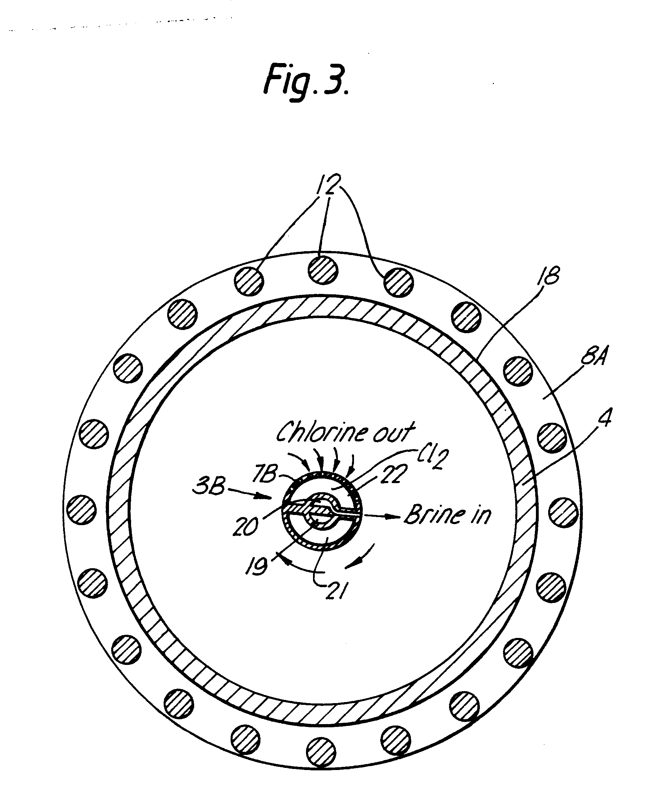

Figure 3 is a transverse section of the circular cross-section cell form of the cell cascade of Figure I along the line BB;

Figure 4 is an enlarged view of a centre joint 3A of Figure 2, depicted in its orientation in Figures I and 2, and

Figure 5 is an enlarged view of a centre joint 3B of Figure 3 depicted in its orientation in Figures I and 3.

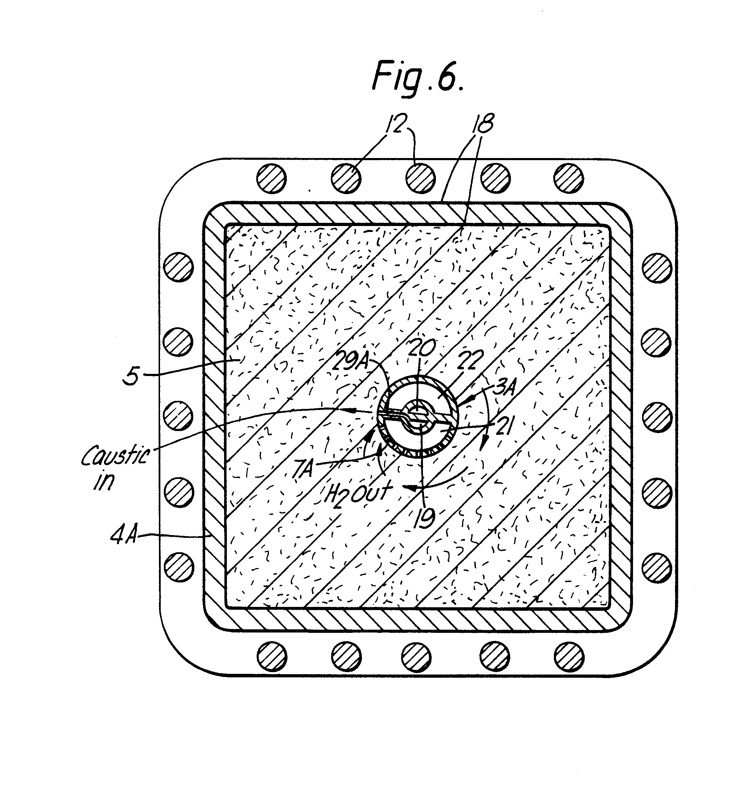

Figure 6 is a transverse section of the square cross-section form of the cell cascade of Figure I along the line AA;

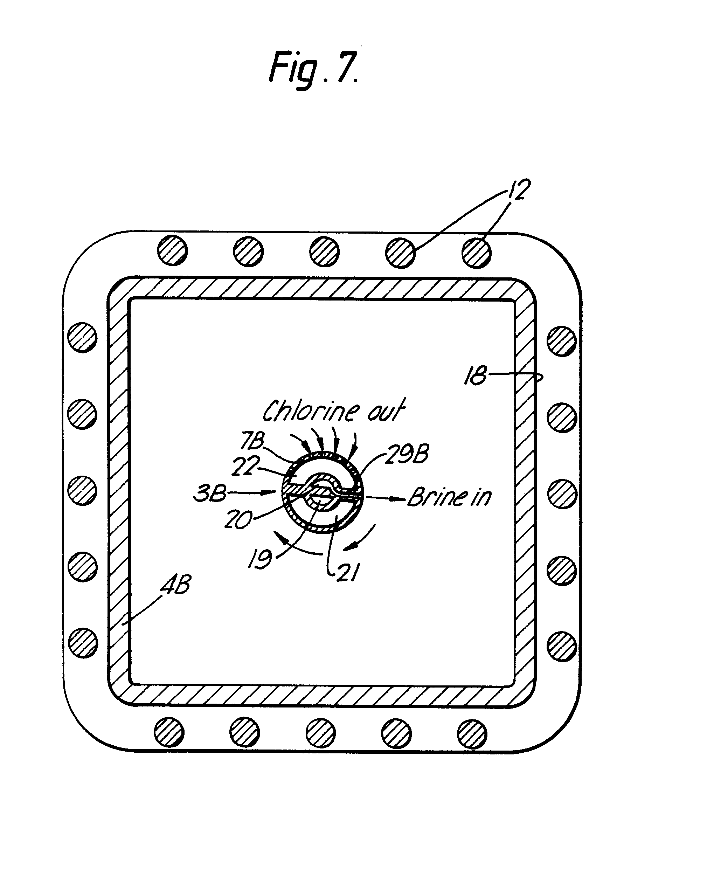

Figure 7 is a transverse section of the square cross-section form of the cell cascade of Figure I along the line BB;

Figure 8 is an enlarged view of an alternative centre joint 3A to that of Figures I, 4 and 6, depicted in a corresponding orientation to that of joint 3A in those Figures.

Figure 9 is an enlarged view of an alternative centre joint 3B to that of Figures I, 5 and 7 depicted in a corresponding orientation to that of joint 3B in those Figures.

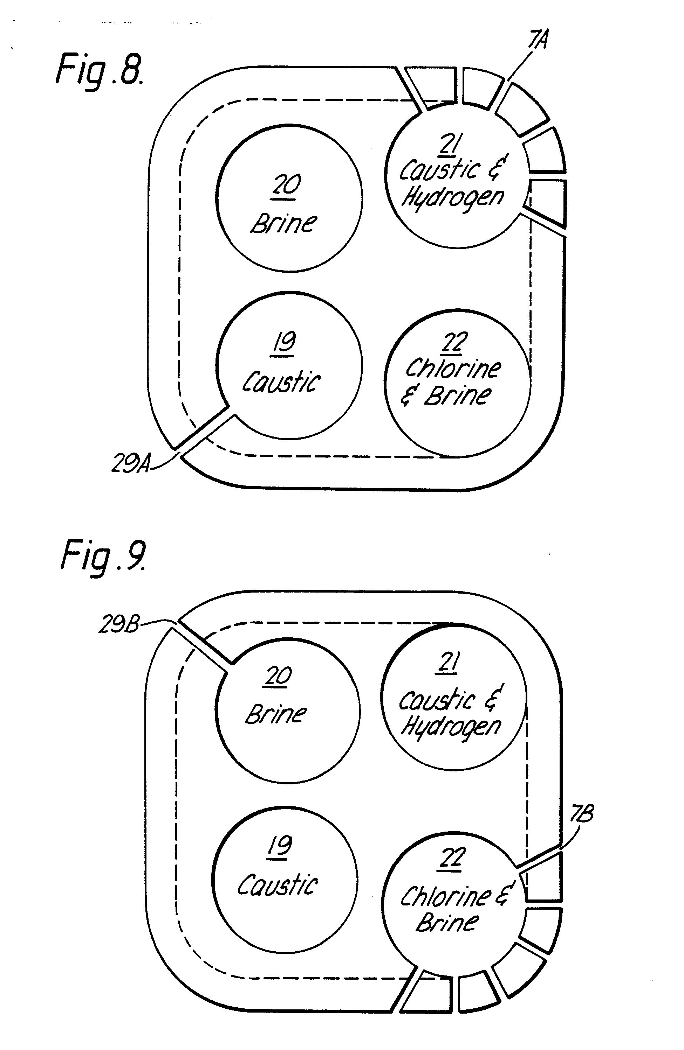

In Figure I, a series cell cascade I is made up of a series of identical repeat unit cells, which except for the two end cells of the cascade, consist of a conductive (e.g. titanium) square plate or disc 2 with central aperture 27 having a central joint 3A and a peripheral gasket 4A axially abutting one face, each being insulative and of equal axial thickness (the gasket 4A is square or circular annular; the joint 3A is essentially circular annular, but described in greater detail hereinafter . An alternative essentially square annular joint 3A is described in connection with Figure 8 hereinafter), and a permeable (metal felt) annular cathode 5 located by and between the joint 3A and gasket 4A, in contact with a square or discoidal membrane 6 with central aperture 27, which is either ion-permeable (e.g. Nafion) or inert and (micro)perforate (e.g. Gortex) axially abutting on one face the joint 3A and gasket 4A and on the other a second central joint 3B and second peripheral gasket 4B, each being insulative and of equal axial thickness (the gasket 4B is square or circular annular; the joint 3B is essentially circular annular, but described in greater detail hereinafter. An alternative essentially square annular joint 3B is described in connection with Figure 9 hereinafter). The joint 3B and gasket 4B axially abut the square plate or disc 2 of the adjacent repeat unit cell.

Thus, in each cell the square plate or disc 2, joint 3A, gasket 4A and membrane 6 define a cathode chamber for retaining a catholyte first fluid phase in contact with the permeable electrode - (cathode) 5 enclosed in the chamber.

In each cell the membrane 6, joint 3B, gasket 4B and the square plate or disc 2 of the adjacent repeat unit cell define an anode chamber for anolyte, the square plate or disc 2 of the adjacent cell being the anode of this cell and the anode-cathode bridge between this and the adjacent cell. The square plate or disc 2 may serve as an anode, or the chamber may be filled with an annular felt anode 42 similar to the cathode.

In Figures I, 2, 3, 6 and 7, each central joint 3A has a plurality of .outlet ports 7A which may be radial perforations through, and/or radial channels. in a face of the joint 3A and which are inter alia means for removing a reaction product phase from the cathode 5 in its chamber.

The two end cells of the cascade are provided, in place of conductive square plates or discs 2 as their outer axial faces, with conductive flanges 8A and 8B of corresponding shape but slightly greater outer dimensions and integral with hollow half-shafts 9A and 9B, which may be respectively positively and negatively charged as described hereinafter. Each flange 8A or 8B has the same number of axial holes I0 uniformly disposed about its periphery, each fitted with an insulative grommet II and axially in register with a hole I0 in the other flange 8B or 8A respectively. Through each axial pair of holes I0 pass elongate clamping bolts I2 with nuts I3 which may be self-locking (as shown) or provided with other conventional locking means such as locking nuts or spring washers or flanged washers each with a lug and set-pin (not shown). These bolts I2 and nuts I3 clamp the half-shafts 9A and 9B into a rigid, rotatable cascade assembly. (Pairs of square or circular annular lips I8 on the faces of the square plates or discs 2 and flanges 8A and 8B locate the joints 3A and 3B and gaskets 4A and 4B in the clamped assembly). The assembly is rotatably mounted in insulative bearings I6A and I6B and there are means for rotating the assembly, and hence the cathode, such as an electric motor and belt or fluid clutch drive (not shown). Slip rings I7A and I7B about the half-shafts 9A and 9B are means for charging the flanges 8A and 8B respectively positive and negative.

The skilled man will appreciate that, although this specific embodiment is described in terms of a permeable cathode for a cathodic reaction, the cascade may be arranged and used, mutatis mutandis in a self-evident manner, with a permeable anode for a similar anodic reaction; or with a permeable cathode and anode for cathodic and anodic reactions with the same or different cathodic and anodic liquid first phases.

The skilled man will also appreciate that if it is desired to produce and remove a liquid second phase, different embodiments of the cascade may be necessary, in particular as regards the specific design the electrode.

Further details of the cascade relate to the solution of problems associated with the use of a cascade rather than a single cell and are thus inessential to the cell per se.

Some of these details such as catholyte and anolyte feeds also relate to the specific use of the described embodiment for the electrolysis of brine anolyte to give chlorine, with the discharge of hydrogen from caustic soda catholyte. The total cell reaction may be represented as:

$$2H^+ + 2Cl^- \rightarrow H_2 + 2Cl_2$$

These specific details may thus be inessential to the cascade when used in other reactions.

In the specific embodiment, it will be seen that it is necessary to feed fresh brine anolyte continuously to the anode chamber to compensate for electrolytic and entrainment depletion, and to provide outlet and collection means for the chlorine evolved. Similarly it is necessary to feed fresh catholyte caustic continuously to the cathode chamber to compensate for similar depletion, and to provide outlet and collection means for the hydrogen evolved.

As mentioned hereinbefore it is necessary to ensure that any inlet feed and outlet collection manifolds and the liquid rates therethrough are designed to minimise leakage currents therethrough and to avoid the shorting-out of any cell in the cascade.

In Figures I, 2 and 3 the cascade is provided with a caustic (catholyte) inlet manifold I9 and a brine (anolyte) inlet manifold 20, each of semicircular cross-section and disposed with their plane walls adjacent to each other on opposite sides of the cascade axis.

Concentric with the caustic inlet manifold I9 and brine inlet manifold 20 respectively are a caustic catholyte and hydrogen outlet manifold 2I and a brine anolyte and chlorine outlet manifold 22, each of semi-annular cross section.

The walls of the inlet manifolds I9 and 20 are defined by the centre joints 3A and 3B, and those of the outlet manifolds 2I and 22 by the discs 2, centre joints 3A, membranes 6 and centre joint 3B, as follows:

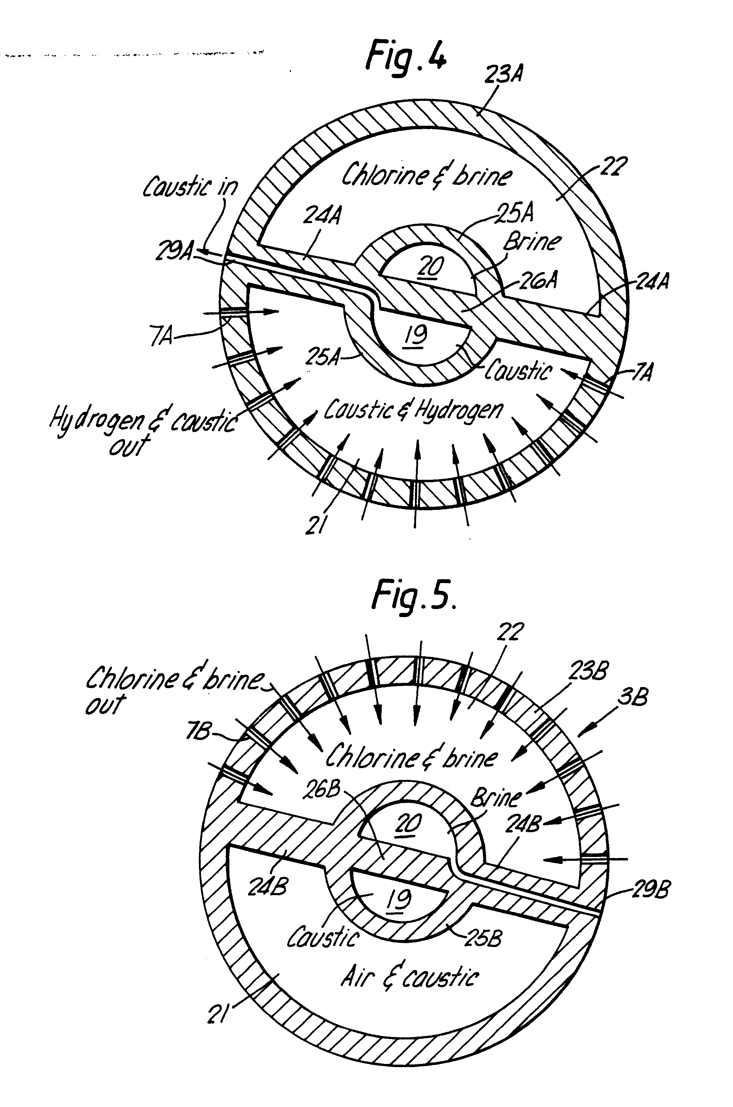

In Figure 4 a centre joint 3A consists of an outer annulus 23A joined by webs 24A to an inner annulus 25A bisected by a brace 26A. The outer annulus 23A webs 24A and inner annulus 25A define spaces which are parts of the outlet manifolds 2I and 22, and the inner annulus 25A and brace 26A define spaces which are parts of the inlet manifolds I9 and 20. Each square plate or disc 2 and membrane 6 has a circular aperture 27 which is so dimensioned, and the cascade assembly is so mounted, that it is in register with the inner periphery of the outer annulus 23A, which latter thus abuts a disc 2 or membrane 6 in the cascade assembly.

The webs 24A, inner annulus 25A and brace 26A stand proud of the faces of the outer annulus 23A by approximately half the thickness of the disc 2 or membrane 6 respectively when compressed in the cascade press.

Radial outlet ports 7A which pass radially through the outer annulus 23A or are channels in that face thereof which abuts the membrane 6 in the cascade assembly, communicate between the caustic outlet manifold 21 and the outer periphery of the joint 3A that is the cathode chamber in the cascade assembly.

A radial inlet 29A, which passes radially through a web 24 or is a channel in that face of the web nearest the membrane 6 in the cascade assembly, communicates between the caustic inlet manifold 19 and the outer periphery of the joint 3A or cathode chamber.

In Figure 8 an alternative centre joint 3A consists of an essentially square lamella having four circular apertures disposed within a square, which are parts of inlet manifolds 19 and 20 and outlet manifolds 21 and 22 respectively. Each square plate or disc 2 and membrane 6 has an essentially square aperture 27 which is dimensioned to lie, in the cascade assembly, along the dotted line in Figure 8.

The part of the joint 3A within the dotted line stands proud of the rest of the joint 3A exactly as do the parts 24A, 25A and 26A in Figure 4.

The parts 7A and the inlet 29A are as described in Figure 4.

In Figure 5 a centre joint 3B is similar to a joint 3A in corresponding essential features viz outer annulus 23B, webs 24B, inner annulus 25B and brace 26B, but is mounted in the cascade assembly rotated through 180° with respect to each corresponding joint 3A.

Thus, radial outlet ports 7B, which, if channels, are again in that face of the outer annulus 23B which abuts the membrane 6 in the cascade assembly, communicate between the brine and chlorine outlet manifold 22 and the anode chamber in the cascade assembly.

Similarly radial inlet 29B, which, if a channel, is again in that face of the outer annulus 23B nearest to the membrane 6 in the cascade assembly, communicates between the brine inlet manifold and the anode chamber in the cascade assembly.

In Figure 9 an alternative centre joint 3B is essentially similar to the joint 3A in Figure 8.

The ports 7B and the inlet 29B are as described in Figure 5.

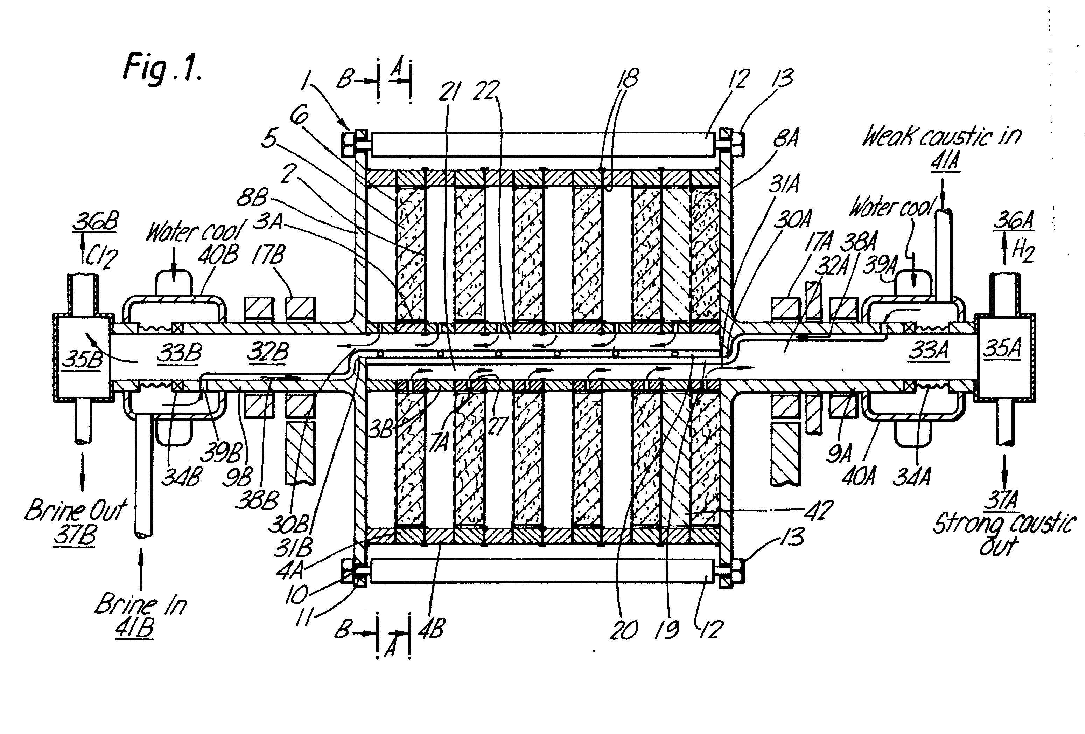

At one end of the cascade in Figure 1, the centre of cathodic flange 8A has an aperture 30A in register with the caustic outlet manifold 21 and an opening 31A in register with the caustic inlet manifold 19.

The aperture 30A communicates with the interior 32A of the hollow half-shaft 9A and thence via the hollow interior 33A of axial bearing 34A to an air-caustic separator 35A with air outlet 36A and caustic outlet 37A.

The interior 33A of the half-shaft 9A is provided with a caustic inlet pipe 38A running between the opening 31A and a caustic inlet port 39A, which opens into the interior of a water cooled radial bearing 40A. The bearing 40A has a caustic inlet 41A.

Similarly, at the other end of the cascade, the centre of anodic flange 8B has an aperture 30B in register with the brine outlet manifold 22 and an opening 31B in register with the brine inlet manifold 20.

The aperture 30B communicates with the interior 32B of the hollow half-shaft 9B and thence via the hollow interior 33B of axial bearing 34B to chlorine brine separator 35B with chlorine outlet 36B and brine outlet 37B.

The interior 33B of the half-shaft 9B is provided with a brine inlet pipe 38B running between the opening 31B and a brine inlet port 39B, which opens into the interior of a water-cooled radial bearing 40B. The bearing 40B has a brine inlet 41B.

It will be appreciated that where the caustic inlet manifold 19, brine inlet manifold 20, caustic and hydrogen outlet manifold 21, and brine and chlorine outlet manifold 22 are formed by the alternative centre joints 3A and 3B of Figures 8 and 9 the means of feeding and clearing the manifolds 19 to 22 will be essentially as described above and will only differ in the size and disposition of their connection to the manifolds 19 to 22.

In operation, first fluid phase caustic solution at 70°C is fed to permeate each cathode 5 from the caustic inlet 41A via the bearing 40A, inlet pipe 38A, caustic inlet manifold 19 and radial inlet 29A, and escapes from the cathode 5 via the radial outlet ports 7A, caustic outlet manifold 21, half-shaft interior 33A, and bearing interior 33A to the separator 35A.

At the same time, brine also at 70°C is fed to each anode 42 from the brine inlet 41B via the bearing 40B, inlet pipe 38B, brine inlet manifold 20 and radial inlet 29B and escapes from the anode 42 via the radial outlet ports 7B, brine outlet manifold 22, half-shaft interior 33B and bearing interior 33B to the separator 35B.

The cathodic flange 8A is charged negatively via the slip ring 17A, and the anodic flange 8B is charged positively via the slip-ring 17B, to a potential difference of (about) 15 v.

Each cathode 5 in the cascade is rotated by driving the half-shaft 9A, via a pulley or pinion mounted on the half-shaft 9A, with an electric motor (not shown).

Cathodic hydrogen is removed from each cathode 5 via the same route as the caustic, described hereinbefore.

Chlorine produced anodically escapes from each anode 42 by the same route as the brine, described hereinbefore.

## Claims

1. An electrode assembly for effecting electrochemical reaction in a liquid first phase, which assembly is characterised by
an electrode,
means for containing the liquid first phase in contact with the electrode,
means for removing a fluid second phase reaction product from the electrode, and
means for rotating the electrode and containing means together about an axis,
such that, on rotating together the electrically charged electrode (in contact with the first phase) and the containing means, the second phase reaction product is removed radially from the electrode.

2. An electrode assembly according to Claim 1 wherein the electrode is a chemically resistant metal gauze or felt permeable to both fluid phases.

3. An electrode assembly according to Claim 2, wherein the permeable electrode is an annulus.

4. An electrode assembly according to Claim 1, constructed for the second fluid phase being a gas and for countercurrent flow of the first and second phases.

5. An electrode assembly according to Claim 4 wherein the assembly is rotatably supported and the means for removing the gaseous second phase comprises a plurality of outlet orifices in a radially inner wall of an electrode compartment which comprises the containing means, and the assembly is provided with at least one orifice in a radially inner wall of the electrode compartment as delivery means for the liquid first phase.

6. An electrode assembly according to Claim 1 having a horizontal axis of rotation.

7. A series cell cascade for electrochemical reaction in a liquid phase, characterised by at least two electrode assemblies according to Claim 1 in series, each assembly being comprised in a lamelliform cell and each pair of adjacent cells having a common conductive wall to provide an anode-cathode connection between adjacent cells.

8. An electrochemical process in a liquid first phase, characterised by rotating together an electrically charged electrode (in contact with the first phase) and means for containing the first phase, so that a fluid second phase reaction product is removed radially from the electrode.

9. A process according to Claim 8, wherein the second fluid is a gas and there is countercurrent flow of the first and second phases, and the electrode is permeable to both phases.

10. A process according to Claim 9, wherein the electrode is a cathode, the first phase is an aqueous catholyte and the second phase is a gas comprising hydrogen.

Fig.1.

Fig.2.

## Fig. 3.

0 226 384

## Fig.4

Caustic in
Chlorine & brine
23A
22
24A
25A
Brine
29A
20
26A
24A
19
7A
25A
Caustic
7A
Hydrogen & caustic out
Caustic & Hydrogen
21

## Fig.5.

22
23B
3B
Chlorine & brine out
Chlorine & brine
7B
26B
Brine
20
24B
24B
19
29B
Caustic
25B
Air & caustic
21

## Fig.6.

# Fig . 7.

12

18

Chlorine out

7B

22

3B

29B

20

Brine in

19

21

4B

**Fig.8.**

7A

20
Brine

21
Caustic &
Hydrogen

19
Caustic

22
Chlorine
& Brine

29A

**Fig.9.**

29B

20
Brine

21
Caustic &
Hydrogen

19
Caustic

7B

22
Chlorine &
Brine

## DOCUMENTS CONSIDERED TO BE RELEVANT

| Category | Citation of document with indication. where appropriate, of relevant passages | Relevant to claim | CLASSIFICATION OF THE APPLICATION (Int. Cl.4) |
|---|---|---|---|
| X | US-A-3 119 759 (T.B. HOOVER)<br><br>* Column 4, lines 68-75; column 5, lines 1-24; claims 1-8; figures 1-5 * | 1,2,4, 5,6,7, 8,9,10 | C 25 B 9/00 |
| | --- | | |
| X | US-A-1 701 346 (THOMSON)<br><br>* Whole document * | 1,4,6, 7,8 | |
| | ----- | | |

|  |
|---|
| TECHNICAL FIELDS SEARCHED (Int. Cl.4) |
| C 25 B 9 |

The present search report has been drawn up for all claims

| Place of search | Date of completion of the search | Examiner |
|---|---|---|
| THE HAGUE | 11-03-1987 | GROSEILLER PH.A. |

EPO Form 1503 03 82